# EUROPEAN PATENT APPLICATION

(11) **EP 1 477 917 A1**
(43) Date of publication of application: **17.11.2004**
(21) Application number: 03010718.9
(22) Date of filing: 13.05.2003
(51) Int. Cl.: G06F 17/60

(54) **System, method, and software application for modelling the structure of enterprises**

(71) Applicant: SAP Aktiengesellschaft, 69190 Walldorf (DE)
(72) Inventor: Puteick, Joachim, 76698 Ubstadt-Weiher (DE); Rieken, Gregor, 69190 Walldorf (DE); Rogge, Martin, 76684 Östringen (DE); Rohdemann, Dirk, 69242 Mühlhausen (DE); Zielonkowski, Martin, 67251 Freinsheim (DE); Henrich, Dirk, 55127 Mainz (DE); Wallmeier, Reiner, 69168 Wiesloch (DE); Gockel, Holger, 67346 Speyer (DE)

(57) **Abstract**

The Invention relates to a system comprising a plurality of first electronic data objects for modelling the structure of an enterprise, each first electronic data object representing a unit of the enterprise and having one or more data fields, comprising:
each first electronic data object having at least two data fields for assigning at least two types of attributes to said unit, wherein the at least two types of attributes are selected from a group consisting of the following five types of attributes:
   - a first type describing the work to be performed by said unit,
   - a second type describing the legal entity, which said unit represents,
   - a third type describing the disciplinary or line management properties of said unit,
   - a fourth type describing the financial responsibility of said unit and
   - a fifth type describing the location, which said unit represents.

## Description

### Background of the Invention

### Field of the Invention.

The technical field of this invention is in the area of electronic data processing. More particularly, the invention relates to methods, computer program products and systems for modelling the structure of enterprises, especially of extended enterprises.

### Description of the Related Art

Modelling the structure of an enterprise, particularly an extended enterprise, within a business software is a critical factor for implementation time and costs and the adequateness of the software implementation itself. An extended enterprise within the concept of this invention is the set of units, which treat a business process as if it would be processed within one company, even if borders of legal entities are crossed. Typically, business applications offer a set of organisational terms driven by software needs and customers have to identify units in their enterprise which come close to the terms the software offers. Unfortunately, this match is rarely very well and, if different applications are to be implemented, interaction between these different applications can become a critical problem. This is outlined in the following paragraph.

In many enterprises different software applications are installed for performing tasks in the areas of financial accounting, human resources, logistics, strategic enterprise management, customer relationship management etc. Although these different software applications may exchange data with each other via interfaces, usually none of these applications contains a complete and true image of the enterprise. Instead, a partial structure of the enterprise is mapped individually to each application according to its specific needs. Such a structure is usually implemented by means of a plurality of data objects. The resulting data are in language usage also referred to as master data. In other words: each application has its own master data of the enterprise. Once installed, such a system may work as long as no changes are made in the master data sets. However, if the structure or organisation of the enterprise changes and these changes have to be adapted to the master data sets of the applications, conflicts may arise if the master data sets can not be adequately adapted. This is frequently the case, because each set of master data is only a in individually and limited image of the structure of the enterprise. When performing such an adaptation, a lot of conversions have to be made, because interfaces between applications refer on different pools of entities and types of entities.

Thus, there is a need for a' system, method, software application and/or data processing system providing a more efficient solution of the problems described above, particularly it is desirable to provide a software application having a mechanism for modelling the structure of enterprises.

### Summary of the Invention

In accordance with the invention, as embodied and broadly described herein, methods and systems consistent with the principles of the invention provide a system comprising a plurality of first electronic data objects for modelling the structure of an enterprise, each first electronic data object representing a unit of the enterprise and having one or more data fields, comprising:
each first electronic data object having at least two data fields for assigning at least two types of attributes to said unit, wherein the at least two types of attributes are selected from a group consisting of the following five types of attributes:
   - a first type describing the work to be performed by said unit,
   - a second type describing the legal entity, which said unit represents,
   - a third type describing the disciplinary or line management properties of said unit,
   - a fourth type describing the financial responsibility of said unit and
   - a fifth type describing the location, which said unit represents.

By using the inventive system in data processing, it is now possible to provide a complete data model even of extended enterprises, which can provide support for cross application business processes. The inventive system allows a streamline implementation of business software and increases the result of the software implementation. The inventive system covers not only the classical company organisation structure, i.e. the breakdown of work, but also the aspects of legal split up, financial responsibility, line management and spatial distribution. It introduces the basic notion of the unit, that can be attributed by at least two aspects (types of attributes), which itself can carry individually hierarchies and relations. With the resulting network of first to fourth data objects, which network may as well comprise first electronic data objects bearing only one aspect, business questions can even answer by applying business rules. Integrity and suitability of the structure model can be assured by maintaining business constraints. The envention has further the technical advantage that a lot of conversions can be saved, because interfaces between different applications can now refer to a common pool of entities and types of entities.

In accordance with another aspect, the invention, as embodied and broadly described herein, methods and systems consistent with the principles of the invention provide a for processing a system as of any of claims 1 to 9 by means of one or more processes running in a computer system, comprising:
creating and/or processing a plurality of first electronic data objects according to claim 1.

The invention is further directed to data structures for the first, second, third and fourth data objects, to a computer system, a computer program, a computer readable medium and a carrier signal comprising instructions for processing the inventive system and/or the data according to the inventive method and in its embodiments, respectively.

Additional objects and advantages of the invention will be set forth in part in the description, or may be learned by practice of the invention. The objects and advantages of the invention will be realized and attained by means of the elements and combinations particularly pointed out in the appended claims.

Embodiments of the invention are disclosed in the detailed description section and in the dependent claims.

It is understood that both the foregoing general description and the following detailed description are exemplary and explanatory only and are not restrictive of the invention, as claimed.

### Brief Description of the Drawings

The accompanying drawings, which are incorporated in and constitute a part of this specification, illustrate embodiments of the invention and, together with the description, explain the principles of the invention. In the drawings,
Fig. 1 is a schematic block diagram of the implementation of the inventive system within a computer system.
Fig. 2 is a UML class diagram describing a possible implemenation principle of parts of the inventive system.
Fig. 3 is an exemplary block diagram depicting the principle of an application of an inventive system on an extended enterprise.
Fig. 4 is a continuation of Fig. 3
Fig. 5 shows an example of an implementation principle of the inventive first data objects with assigned types of attributes by means.
Fig. 6 shows an example of an implementation principle of types of assignments, of assignments and of second and third data objects.
Fig. 7 shows an example of an implementation principle of the assignments of second and third data objects.

### Detailed Description

Computer and program are closely related. As used hereinafter, phrases, such as "the computer provides" and "the program provides or performs specific actions", are convenient abbreviation to express actions by a computer that is controlled by a program or to express that the program or program module is designed to enable the computer to perform the specific action.

Within the concept of this invention, the terms used shall have their usual meaning in the context of the field of data processing unless defined otherwise in the following sections:

A data structure is a specialized format for organizing and storing data. General data structure types include the array, the file, the record, the table, the tree, and so on. Any data structure is designed to organize data to suit a specific purpose so that it can be accessed and worked with in appropriate ways. In computer programming, a data structure may be selected or designed to store data for the purpose of working on it with various algorithms. A computer system can be a stand alone computer such as a PC or a laptop or a series of computers connected as a network, e.g. a network within a company, or a series of computers connected via the internet, including any usual peripheral devices, respectively. A plurality means at least three, particularly at least ten. In practical systems the number of first data objects may amount from three or ten, when modelling small companies, up to some ten to hundred thousands, when modelling large enterprise groups.

Units are the building blocks of an enterprise or an extended enterprise including a partner structure, respectively. The first data objects represent such units. The type of attributes are hereinafter alternatively referred to as aspects. Accordingly, the first aspect is called work aspect (W), the second aspect is called legal aspect (L), the third aspect is called people aspect (P), the fourth aspect is called financial aspect (F) and the fifth aspect is called site aspect (S). The L aspect describes an aspect of legal characteristics. The W aspect describes the distribution of labor (work breakdown). The P aspect describes the assignment of personnel. The F aspect describes the financial responsibility and the S aspect the spatial structure. From that describtion follows that those five aspects are different and independent of each other. Further, this set of five aspects has the advantage that it covers all required areas for modelling enterprises. Therefore, this set can be considered to be complete. The five aspects further carry equal weight and can be treated fully symmetrical. This means that there is basically no leading aspect. In a specific use case, each aspect can be used to create a structure. This is one of the advantages of the inventive system that it is not necessary compared to the state of the art to define one hierarchy, e.g. a line management hierarchy, as a leading structure for the modelling of the enterprise.

Assignments between the first electronic data objects (=units) can structure the units hierarchically for every aspect. To each assignment, an assignment type may be assigned.

In computer programming languages, the first, second, third and fourth data objects of the inventive system may be implemented by means of one or more lines of one or more tables, each line having one or more data fields. In object orientated programming such data objects may be implemented by instances of classes. The assignments may be implemented by entries of IDs in tables as well. The Assignment of an assignment type may be implemented by an entry in an assignment table. Assignments may be directed or undirected, e.g. by entries in tables like "belongs to" or "receives from". All assignments within the concept of this invention can be descriptive. They can be filled with semantics, which can be interpreted by BAC software.

Accordingly, a first embodiment of the system is characterized in that one or more first electronic data objects of said system are assigned to on or more other first electronic data object of said system.

A second embodiment of the system is characterized in that one or more attributes are assigned to each type.

This enables enterprise modelling. Attributes of the L aspect can contain a description of the legal entity, e.g. by its name or entry in the public register of companies, the sales tax ID, address etc. Attributes of the W aspect can e.g. contain a description of what has to be done (activity), what objects are to be used to do it (area) or in which system it is to be done. Attributes of the P aspect can contain descriptions of e.g. whether a or which manager is responsible for performing salary review, training, performance feedback, confirmation of leave requests etc. Attributes of the F aspect can contain descriptions of the financial responsibility by specifying which finance technical key figures should flow into the results definition of the respective unit, e.g. a cost center. Attributes of the S aspect can contain information on the location of the resective unit, e.g. address, geographic coordinates, language specific describtions, federal state, public holiday calender etc. Structuring an enterprise does not just involve the preparation of a simple list of units but also the documentation of their relationships to each other. Differing aspects of the same unit can be entered in the hierarchy differently. It is therefore advantageous that the hierarchy is carried by the aspects and not by the units.

The delegation of commercial tasks can be described using an explicit hierarchy amongst the attributes of the work aspects. Example: If a company produces goods, it has to buy raw material, for what presumably a purchasing division will be responsible.
A particular quantity of legal entities represents firms. They are on the same level with the same value. Above this level there can be a network of subgroups.

The breakdown of financial responsibility can be made using an explicit hierarchy. It crosses the IAS-segments and the profit centers, and ends in the basic units representing cost centers, projects, orders and activities.

The spatial inclusion of sites can be mapped by an explicit hierarchy under the site aspects. If sub-characteristics are given in the same way as for financial aspects, clear requirements of the type "a warehouse is always at a site" are possible.

The reporting hierarchy can be mapped by an explicit hierarchy, e.g. "is line manager of" between the people aspects.

A third embodiment of the system is characterized by one or more third electronic data objects representing natural persons of the enterprise, said third electronic data objects being assignable to one or more types of attributes of one or more of the first electronic data objects and/or to one or more second electronic data objects.

Due to such third electronic data objects (=persons) natural persons and their sometimes complex description can be referenced from the model of the enterprise. Persons can have assignments to aspects of units. Persons can undetake one or more job responsibilities of a work aspect. These job responisibilities may also be connected to several types of work. Persons can belong to a legal entity. A particular affiliation could be a managing director or someone acting on his behalf. Persons can be assigned to a F aspect, e.g. a cost center of a unit. Persons can be assigned to a S aspect, e.g. a location, what means that the default location of the person is the assigned location. Persons can further be assigned to a P aspect, e.g. as an employee or as a responsible (disciplinary) manager. The assignments are advantageously drawn to aspects of a unit and not to the unit itself. Then the assignments are free to differ from aspect to aspect. For each aspect a corresponding abstract responsibility can be created, which automatically requires a corresponding person responsible. Hence, no cost center without manager, no division of labor without labor administrator(s) (foreman, manager), no firm without a chairman etc.

A fourth embodiment of the system is characterized by one or more second electronic data objects representing positions in the enterprise, said second electronic data objects being assignable to one or more types of attributes of one or more first electronic data objects.

Such second electronic data objects(=positions) are useful, because in real life, work breakdown and assignment of people is pragmatic and rapidly changing. But other parts of the enterprise structure are more static and individual persons address well established sets of job responsibilities. In this case a notion of a "should_be"-person is useful. The representation of such a "shouldbe"-person is a position. The position can be designed to serve as an indirection between a person and a set of job responsibilities. Since all aspects can be treated symmetrically, positions can substitute persons in all assignments to aspects and/or attributes of units. Positions offer indirection between persons and aspects of units. But this is not exclusively. There is full freedom to use indirection and free assignment on demand. That means that one person can "just do the job" and be assigned to a position that describes all of its assignments to aspects of units. In the same model another person can be assigned directly everywhere and is not assigned to a position at all. And a third person can be assigned to a position and can undertake (be assigned to) an additional job responsibility not included in the position or have an explicitely stated different cost assignment.

A fifth embodiment of the system is characterized by one or more fourth data objects representing movable or immovable things of the enterprise, said fourth data objects being assignable to one or more types of attributes of one or more of the first electronic data objects.

These fourth data objects may also be implemented by on or more lines of one or more tables.

A sixth embodiment of the system is characterized by one or more rules for defining one or more evaluation algorithms to retrieve attributes or types of attributes of one or more of the first electronic data objects. Such rules are hereinafter referred to as business rules.

In the important special case of classic organization, a considerable amount of redundancy may arise without additional model elements. Within a classic organisation at least W, P and F aspects fall together and L and S aspects are hierarchically in sync with others. The redundancy can arise when the three hierarchies for W, P and F are stored redundantly. Furthermore, a sales employee, for example, must be assigned five times though this is redundant (at least three times to the same structure element). All legal assignments are aligned with the P hierarchy, etc.

It is therefore useful to allow more complex rules for evaluating the knowledge contained in the model than the simple access to descriptions or relationships. A suitable means of doing this is a defaulting mechanism in the form of configurable evaluation methods, the business rules. This concept goes beyond the straight inheritance along a hierarchy, to the extent that hierarchies can themselves be transferred.

A business rule describes a search path through the network of persons, positions, aspects of units and the various relationships between them. This includes the assignment of persons to aspects, the hierarchies amongst the aspects and the implicit "identity" relation between different aspects of the same unit.
Business rules can advise to follow another hierarchy, if the desired one is not maintained, to read another assignment of a person, if the assignment asked for is not specified, to follow some hierarchy up to a certain level to find the value of an attribute, if not assigned locally (this is close to inheritance), to read another attribute instead, if the information is not provided in the attribute asked for, etc.
The business rules can be inserted into each other. That means, if they are implemented e.g. as subprograms, that these subprograms can call each other.
For each request to the enterprise structure model by a user a business rule how to find the answer can be created.

### Examples are:

If a people hierarchy is maintained between two units with P and F aspects, but a F aspect is required, the people hierarchy can be used if no other explicit financial assignment is affected. If a person undertakes a job responsibility depending on a W aspect, whose unit also carries a F aspect (such as cost centre) or a people aspect (department) then this person ought to be assigned to the cost centre or department. If this involves a leadership function, this should also affect the financial and people leadership responsibility. This applies if no other explicit financial or people assignment for the person is implemented (which would "overwrite" the default provided by the business rule).
If different financial and work assignments are affected, then a business rule needs to be used to determine whether the two assignments can be used as a default for the financial assignment. Alternatively the model can be flagged as inconsistent or incomplete at this point.
A business rule to find the public holiday calendar for a detailed site utilizing a business rule that implements inheritance of the public holiday calendar downwards along the S-hierarchy
A business rule that lets the employer of an employee object default in the only firm it does work for. Finding the firm, which can be uniquely defined, can be implemented by calling another (presumably already implemented) business rule, that navigates from a job responsibility to a L-aspect (i.e. the firm that runs the W-aspect).
A business rule that finds the "federal state" of the official residence ("office") of an employee by first looking directly to the employee ("contract") if anything is specified. If not, the rule will navigate from employee to person (the only way is the newly introduced relation above) further to a W-aspect for which the person undertakes a job responsibility (the path will possible branch here). Then the rule applies another rule (presumably already implemented) to find the site of a W-aspect utilizing various hierarchies and identification via unit identity). If the investigation of the network described above results in a unique "federal state", the rule delivers this "federal state" as its result. Otherwise it will throw an exception because the structure model is inconsistent.

A seventh embodiment of the system is characterized by one or more rules for the limitation of the assignments and of relations amongst first, second, third and fourth electronic data objects. Such rules are hereinafter referred to as business constraints

It is also be advantageous to limit freedom of modelling by placing rules, the business constraints. Such rules can be of general business meaning and introduce restrictions of possible "real worlds" into the modelling activity. For example a business constraint can be to place a profit centre not below a cost centre in the financials responsibility hierarchy.
On the other hand a given business software working on a data model based on the inventive system may have functional limitations (intended or grown) that needs assumptions about what the model contains. For example, a site object that keeps stock may need a unique assignment to a owning firm.
A straightforward special case will be the constraint: "Business Rule XY should always terminate returning a unique result". There may be, however, more intricate limitations that will need more language elements to be described.

If, for example, a user wishes that a sales office is a unit with the following properties,
- It has exactly the work, financial, site and people aspects
- It always belongs to our sales company (legal)
- The following responsibilities depend on the work aspects
   o Sale of products from the division <listen-variable> to customers in the federal state <festwert-variable>
   o Organization of the sale for this work
   o Carrying out clerical work for all employees working at this site
- The financial aspect is a cost centre managed by the same person who organizes the sale (work or responsibility)
- The people aspect has full responsibility for personnel for employees who depend on the sales responsibility (work or responsibility)
- The personnel responsibility for the clerical staff falls to the head office of the company for a service department
- The employees who assume responsibility for the sales office all have their administrative office there (site)
then it is advantageous to define these facts in the form of a software product, which provides means:
- Which prompt whether a template should be used as the basis when creating a unit
- Which, when having chosen a template, let appear a wizard / input assistant allowing the custom parameters to be filled, and then branches direct to person assignment
Having done this any additional modifications (within the model) can be made.

A first embodiment of the inventive method as described in the summary section is characterized in that the method further comprises a step of assigning at least to types of attributes as of claim 1 to one or more of said first electronic data objects.

A second embodiment of the inventive method is characterized in that the method further comprises assigning a first electronic data object to one or more other first electronic data objects.

A third embodiment comprises assigning one or more attributes to each type of attributes.

A further embodiment comprises creating one or more second electronic data objects representing positions in the enterprise, said second electronic data objects being assignable to one or more types of attributes of one or more first electronic data objects.

A further embodiment is characterized by creating one or more third electronic data objects representing natural persons of the enterprise, said third electronic data objects being assignable to one or more types of attributes of one or more of the first electronic data objects and/or to one or more second electronic data objects.

A further embodiment is characterized in that creating one or more fourth data objects representing movable or immovable things of the enterprise, said fourth data objects being assignable to one or more types of attributes of one or more of the first electronic data objects.

In a still further embodiment the invention comprises creating one or more rules for defining one or more evaluation algorithms to retrieve attributes or types of attributes of one or more of the first electronic data objects.

Additionally, a still further embodiment comprises creating one or more rules for the limitation of the assignments and of relations amongst first, second, third and fourth electronic data objects.

An other embodiment is characterized by assigning an assignment type to an assignment.

A still further embodiment is a the inventive method for use in a software for supporting business processes.

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices (storage means) for storing data, e.g., magnetic, magneto-optical disks, or optical disks. Information carriers suitable for embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the invention can be implemented on a computer system having a display device such as a CRT (cathode ray tube) or LCD (liquid crystal display) monitor for displaying information to the user and a keyboard and a pointing device such as a mouse or a trackball by which the user can provide input to the computer. Other kinds of devices can be used to provide for interaction with a user as well; for example, feedback provided to the user can be any form of sensory feedback, such as visual feedback, auditory feedback, or haptic feedback; and input from the user can be received in any form, including acoustic, speech, or haptic input.

Reference will now be made in detail to the principles of the invention by explaining the invention on the basis of a data processing process, examples of which are illustrated in the accompanying drawings. Examples, mentioned therein, are intended to explain the invention and not to limit the invention in any kind.

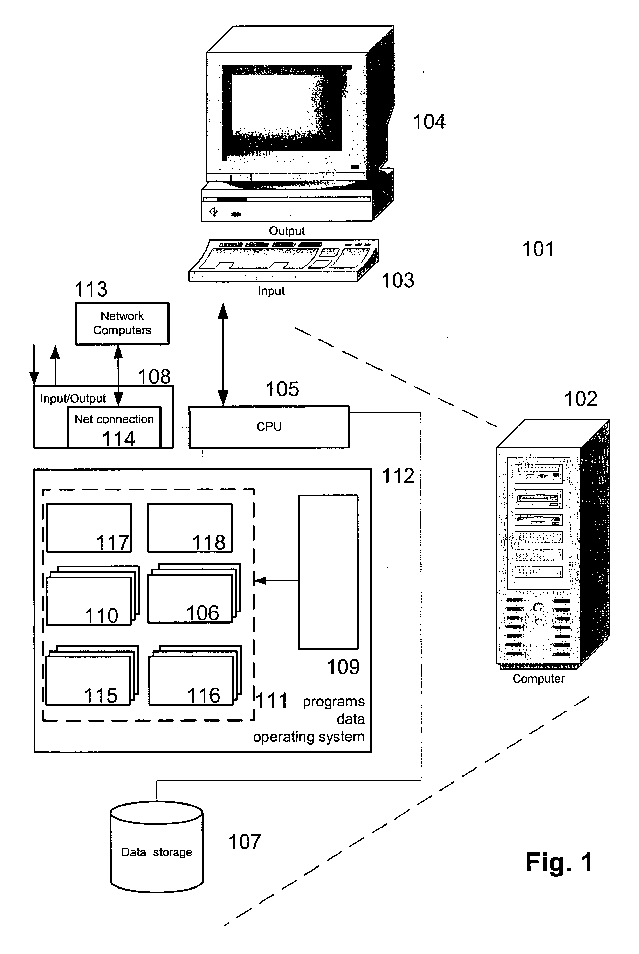

Fig. 1 shows one example of an implementation of an embodiment of the invention: A computer system with program modules for processing the inventive system and for performing the inventive method. Fig. 1 shows a computer system 101 comprising a computer 102 having a CPU 105, a working storage 112 (memory), in which an software application 109 is stored for being processed by CPU 105. Memory 112 is designed to store programs, data and the operating system of the computer 102. Software application 109 can comprise one or more program modules for creating and processing or using the an inventive system 111. The inventive system 111 comprises a plurality of first electronic data objects 110, one or more second electronic data objects 106, one or more third electronic data objects 115, one or more fourth data objects 116, a set of business rules 117 and a set of business constraints 118, which all can be held in memory 112 for being accessed or applicated by program 109. Computer System 101 further comprises input means 113, output means 112 for interaction with a user, e.g. for starting the program modules and/or for data input, and general input/output means 104, including a net connection 114, for sending and receiving data. A plurality of computer systems 101 can be connected via the net connection 114 in the form of a network 113. In this case the network computers 113 can be used as further input/output means, including the use as further storage locations. Computer system 103 further comprises a further storage means 107, in which general data and the data objects 110, 106, 115, 116, the business rules 117 and the business constraints 118 are stored permanently.

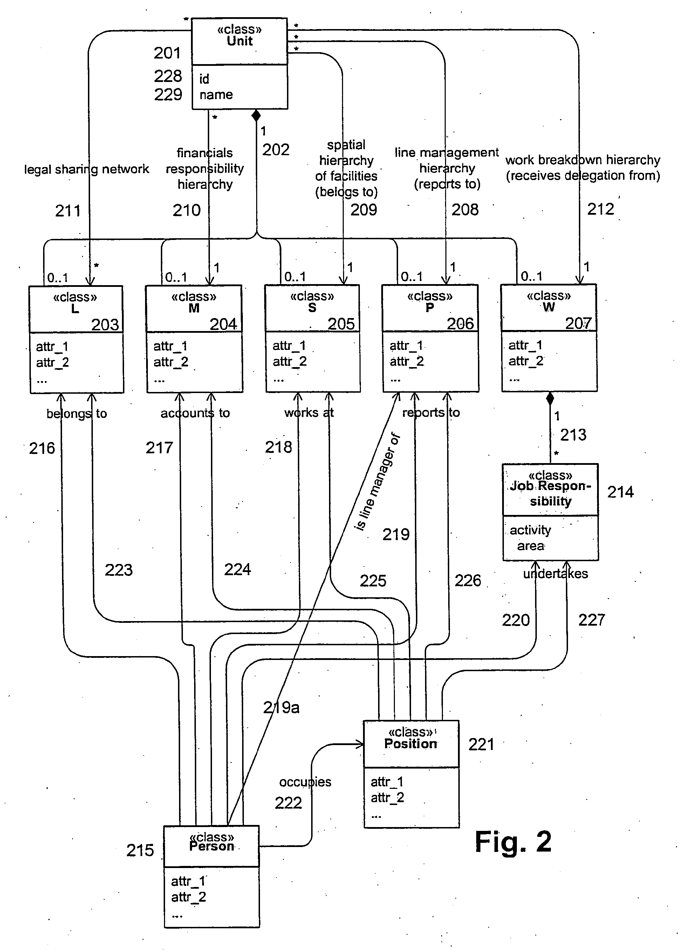

Figure 2 shows a UML class diagram describing a possible implementation of parts of the inventive system. The figure shows a class of first electronic data objects 201 (unit) comprising data fields for an identifier (id) 228 and a name 229. At least two, in the example at least 5 further data fields are available for the assignment of types of attributes. A unit 201 may be assigned to one or more of the types of attributes (aspects) 203, 204, 205, 206, 207, which are shown as classes in the UML diagram. Aspect class 203 is in the example of figure 2 the legal aspect class, aspect class 204 the financial aspect class, aspect class 205 the site aspect class, aspect class 206 the people aspect class and aspect class 207 the work aspect class. Legal aspects (class 203) comprises one or more attributes 1 to n, which describe the legal entity represented by the respective unit 201, for example the name, the entry in the list of companies etc. The financial aspect 204 comprises one or more attributes 1 to n, which describe what types of finance technical indexes are to be continued to one the respective units 201, for instance costs, revenues, reliabilities, debts etc. Site aspect (class 205) comprises one or more attributes 1 to n, which describe the properties of the spatial structuring contained in the respective unit 201, for example geographic coordinates, address, opening hours, language characteristics etc. Instances of the people aspect class 206 comprises one or more attributes 1 to n, which describe which measures of personal management are applied on the respective unit by a responsible manager, for example performance feedback, salary dispute, leave requests etc. The work aspects (class 207) comprise links 1 to n to data objects 214, which represent job responsibilities of the respective unit 201. The job responsibilities 214 differ in so far from the attributes of the other aspects mentioned above as they are itself structured data objects. In a job responsibilities object 214 it can be described what has to be done and on what objects the respective work has to be performed. A connection 213 from aspect 207 to job responsibility 214 indicates by the filled rhombus that a job responsibility 214 exists only in the context with a work aspect 207 and the "1" indicates that it exists only in the context of a single work aspect 207. The "*" at the connection line 213 indicates that any number of job responsibilities 214 can be assigned to one work aspect 207.

As already mentioned, aspects can be assigned to units. These assignments 208, 209, 210, 211 and 212 are now described in more detail. The composition 202 from the class of units 201 to the classes of aspects 203 to 207 indicates that one unit can have assigned five attributes. The filled rhombus indicates that an aspect exists only in the context with a unit. The "0..1" indicates that either one aspect of a class of aspects 203 to 207 can be assigned to one unit 201. The assignment 208 describes a line management hierarchy in that any number (*) of units 201 can report to one people aspect. The combination of the composition 202 and the assignment 208 means that in the case of an instance diagram a people aspect can be assigned to a unit (202) and a further unit can be assigned to that people aspect via an assignment (208) to the respective unit which has that people aspect assigned. A hierarchy is created by the assignment 208 in combination with assignment 202 because the assignment 208 is directed to the people aspect via its property "reports to". The same principles apply with respect to the creation of hierarchies relating to the other aspects by using combinations of the relations 202 and 209, 210, 211 and 212, respectively. However, the assignment 211 differs from the other assignments, because an "*" is attached to both ends of the connection line. This reflects the fact that one company may belong to a plurality of other companies and each company may be a partial owner of the other companies.

Figure 2 further shows a class of third data objects 215 (persons), which represent persons of a unit or Enterprises. These third data objects comprises data fields 1 to n, for describing properties of said persons like name, address, etc. These third data objects 215 can be assigned to aspects of the classes 203 to 207, whereby the attributes of the aspects of class 207 are the data objects 214, the job responsibilities. These assignments are represented by the connection line is 216 to 220. Further, a type of assignment is assigned to each of these assignments. The assignment 216 is of the type "belongs to", assignment 217 is of the type "accounts to", assignment 218 is of the type "works at", assignment 219 is of the type "reports to" and assignment 220 is of the type "undertakes". These assignments may be analyzed by business rules. The assignment 216 means that the respective person is an employee of the respective company were legal entity. So, and business rule analyzing the data can retrieve the company a special person belongs to. The assignment 217 can describe the costs center to which the person accounts. The assignment 218 means that the person is considered to work at a specific place, for example its normal office. The assignment 219 means that the person reports to another person who is assigned to the same people aspect 207 by an other assignment 219a. The assignment 220 means that the respective person performs the work described in the respective job responsibility 214.

Figure 2 further shows a class of second data objects 221, which represent positions of a unit or enterprise, for instance the position of a housekeeper. Persons 215 can be assigned to positions 221 by assignments 222, which are of the type "occupies". Such positions 221 can be assigned to aspects (classes 203 to 207) by assignments 223, 224, 225, 226 and 227 in the same way as described for the persons 215. The advantage of the concept of the positions is that in case is specific person leaves its position and another person occupies that positions, only one assignment has to be drawn, namely from the other person to the respective positions. In the case without position, all assignments of the leaving person would have to be reassigned to the other person.

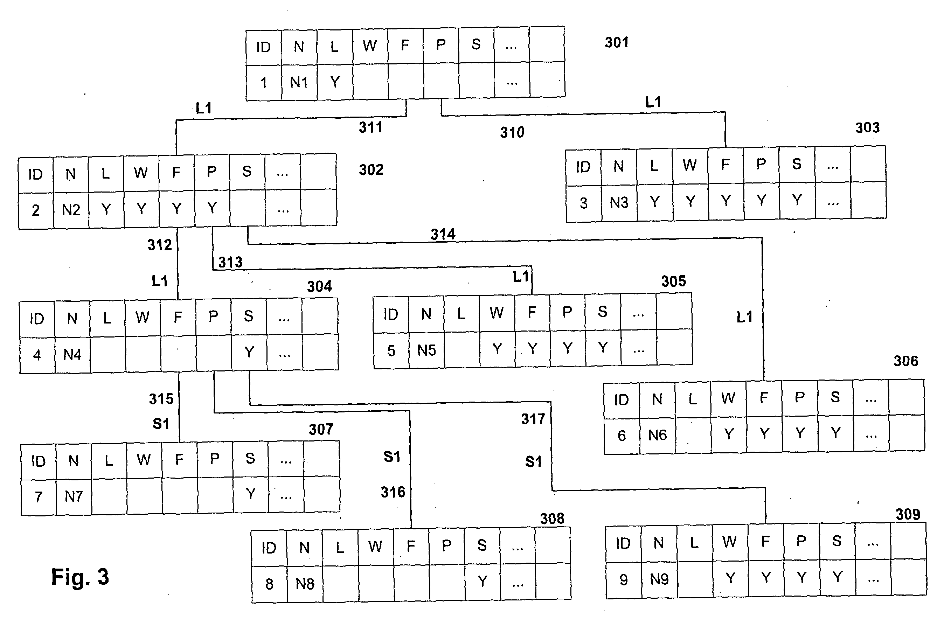

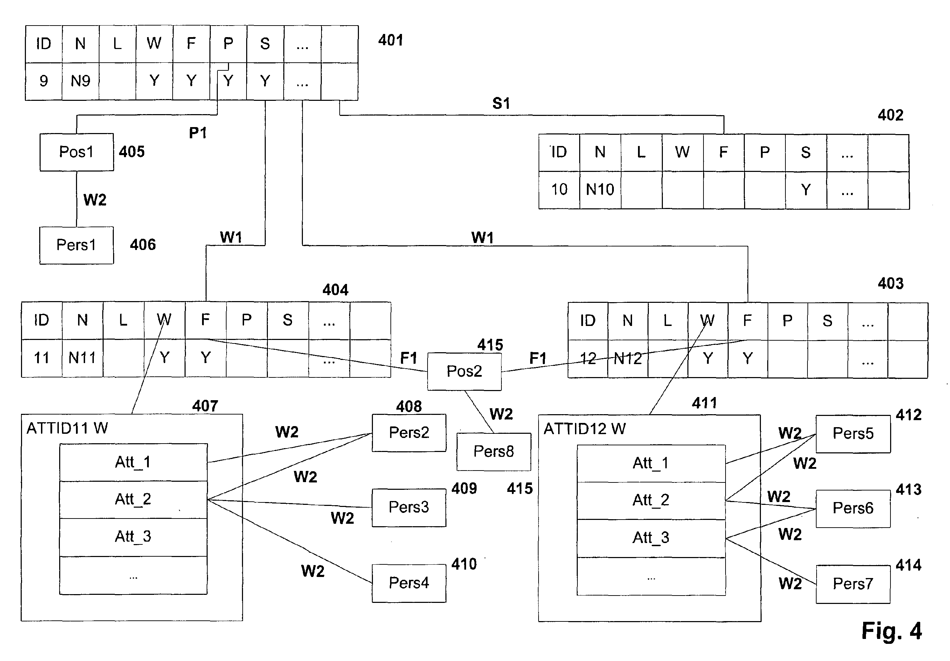

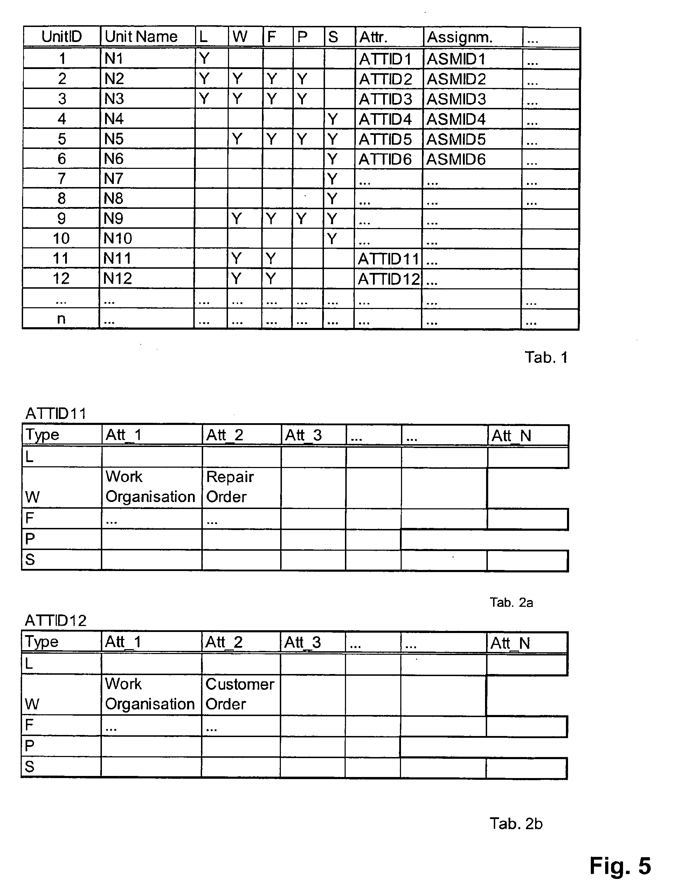

Figures 3 to 7 show an example of an application of the inventive system on an enterprise group, which sells and repairs a certain good. Figures 3 and 4 show the structure of the enterprise group in the form of a block diagram containing first data objects representing the units of the enterprise group as well as their relationships. Figures 5 to 7 show an example of an implementation of the data model of that enterprise group by means of tables 1 to 9, which tables can be implemented by means of a data base system, particularly a relational database system.

The enterprise group is represented by a first data object 301, the structure of which is shown in table 1. Each line of table 1 represents a first electronic data object, abbreviated as unit in the following section. Each unit has a data field for an identifier (Unit ID) and a name (UnitName). Further, five data fields L, W, F, P, S are available for assigning the respective type of attributes (aspect) to the unit. Such an assignment is given, if a Y is entered in the respective data field. Unit 301 has the ID 1, the name N1 and a L aspect. Unit 301 represents the leading entity of the enterprise group. Each unit further has a data field "Attr.", which contains a reference to a further table, in which the attributes of the respective aspect of the respective unit are defined. In the example of unit 11 the Attr. field references to a table ATTID11 (table 2a). By means of such a table attributes 1 to N can be assigned to each type of aspects. The number N may be different for each aspect. In this specific example a first attribute "work organisation" and a second attribute "repair order" are assigned to the W aspect of unit 11. With reference to unit 12 table 2b shows that a first attribute "work organization" and a second attribute "customer order" are assigned to the W aspect of unit 12. The units as defined by table 1 further compromise a data field "Assignm." by means of which are the units can be assigned to the respective unit. The Assignm. field references to a table, in which the assignments of a specific unit to other units are contained. An example of such an assignment table is table 4. Table 4 shows exemplary the assignments of unit 4.
The assignment field of unit 4 references to the assignment table ASMID4 shown in table 4. Each line of table 4 contains one assignment. An assignment consists of an assignment number AsmNo, the identifier of the assigned unit and a type of assignment. In case of the system having N units, N-1 assignments can be established to other units. In the example of table 4 unit 4 has four assignments and is assigned to units 2, 7, 8 and 9. The first assignment is of a type L1, the second to fourth assignments are of a type S1. The types of assignments are described by means of table 3. Each line of table 3 defines one type of assignment. An assignment comprises a type name data field "type" and a description data field "description". Accordingly, the first assignment of unit 4 is of the type "belongs to".

From figure 3 it can now be seen that two units 302, 303 are assigned to unit 301 by assignments 311, 310. Both assignments are of the type "belongs to". Unit 302, 303 represent subsidiaries named N2, N3 belonging to the enterprise group named N1. Depending on the properties of the respective subsidiaries, unit 303 can have all five aspects assigned, unit 302 only four. Starting from unit 302, the structure of the enterprise further branches to units 304, 305 and 306. These three units are assigned to unit 302 by assignments 312, 313 and 314, each of the type "belongs to". Units 305 and 306 represent branches of the legal entity represented by unit 302 and therefore have no own legal (L) aspect. Unit 304 represents a location of unit 302 at a specific place and therefore can have only a site (S) aspect.

Starting from unit 304, the structure of the enterprise further branches to units 307, 308 and 309, which units are assigned to units 304 by assignments 315,316 and 317. These assignments are all of the type S1, "works at" (compare table 3), what means that they are located at the site defined in unit 304. Units 307 and 308 represent depots of unit 302 and therefore have only a S aspect. Units 309 represents a branch of unit 302 having own work organization, line management hierarchy, financial responsibility and location and can therefore have the respective four aspects.

In figure 4, unit 309 of figure 3 is explained in more detail as unit 401. The branch 401 of the subsidiary 302 has three units 402, 403 and 404 assigned. Unit 404 represents a repair division, unit 403 a purchasing division. Both units are assigned to unit 401 by an assignment of type W1, "undertakes something", and attribute of the W aspect, what means that both units are part of the work organization of unit 401. Both units further have own financial responsibility and therefore carry additionally a F aspect. Unit 402 only represents a depot of unit 401 and therefore carries only a S aspect. Its connection to unit 401 is of type "works at".

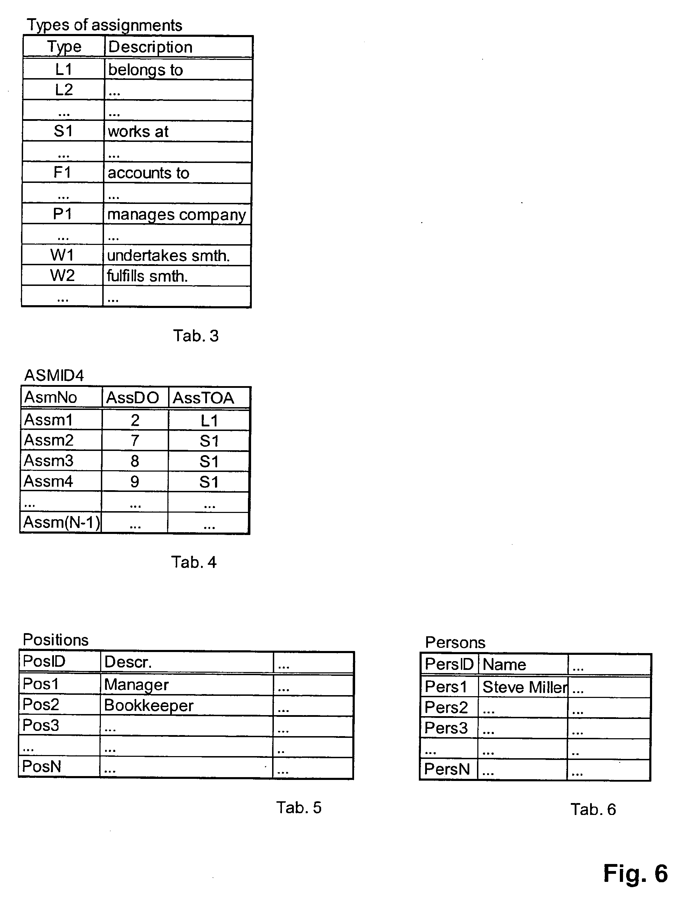

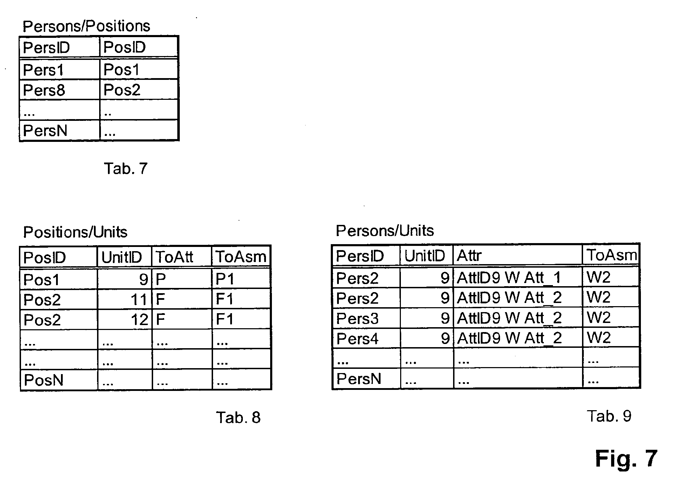

In figure 4, they position 405 is assigned to the P aspect of unit 401. A position is a data object, which can be implemented as a line of a table as described in table 5 of figure 6. A position comprises a data field for an ID, a data field for a description and, optionally, further data fields. The assignment of a position to an aspect of a unit can be implemented by means of a table as shown in table 8 of figure 7. Therein, one line represents one assignment. A first data field "PosID" contains the ID of the position to be assigned. A second data field "UnitID" contains the ID of the unit which carries the aspect the position is to be assigned to. A third data field "ToAtt" contains the aspect to which the position is assigned. A fourth data field "ToAsm" contains the type of assignment, which can be taken from table 3 of figure 6. As can be seen from table 8, a single position can be assigned to different aspects of different units and one aspect of a unit can have different position is assigned. This is shown by a position 415, which is assigned to the F aspect of units 404 and 403. The assignment type of position 405 to unit 401 is P1, "manages company", what means that this position is for a person who manages the unit of the enterprise represented by unit 401. The assignment of position 415 is of type F1, "accounts to", what came mean that this position is financed by units 404 and 403. Consequently, a person 406 is assigned to position 405. A person is a data object representing a natural person. Again, such data object can be implemented as a line of a table as described in table 6 of figure 6. Therein a person comprises a data field "PersID" for an ID, a data field "name" for the name of the respective person and, optionally, further data fields for further information about the person. The assignment of persons to positions can be implemented by means of a table as shown in table 7 of figure 7. One person can be assigned to one or more positions and one position can have one or more persons assigned. Additionally, a type of assignment can be assigned to the assignment of persons to positions in the same way as pointed out above. In figure 4 the assignment of person 406, Steve Miller, to position 405, company manager, is of type W2, fulfills, what means that Steve Miller is the manager of the unit of the enterprise represented by unit 401. Further, a person 415 is assigned to position 415 by a type W2 assignment as well.

A number of attributes 1 to n is assigned to the W aspect via table 407, which corresponds to table 2a of figure 5. As shown in figure 4, a second person 408 is assigned to the first and to the second attribute of the W aspect of unit 404. A third and fourth person 409, 410 are assigned only to the second attribute of said W aspect. These assignments of persons to attributes can be implemented by means of a table as shown in table 9 of figure 7. Therein, one line represents one assignment. A first data field "PersID" contains the ID of the person to be assigned. A second data field and "UnitID" contains the ID of the unit, which carries the respective aspect. A third data field "Attr" contains a link to the data field in which the target attribute of the assignment is stored. In the example of Pers3 this is the second attribute of the W aspect of unit 404, "repair order". Additionally, a type of assignment can be assigned to the assignment of persons to attributes in the same way as already pointed out above. In table 9 this is implemented by a data field "ToAsm". There from it follows that the assignment of person 409 is of type "fulfills", what means that in "real life" person 409 performs repair orders in the repair division.

The same rules apply in principle to the attributes in table 411, which corresponds to table 2b of figure 5. Persons 412, 413, 414 are assigned to attributes of the W aspect of unit 403 in the same way as pointed out in the preceding paragraph.

Modifications and adaptations of the present invention will be apparent to those skilled in the art from consideration of the specification and practice of the invention disclosed herein. The foregoing description of an implementation of the invention has been presented for purposes of illustration and description. It is not exhaustive and does not limit the invention to the precise form disclosed. Modifications and variations are possible in light of the above teachings or may be acquired from the practicing of the invention. For example, the described implementation includes software, but systems and methods consistent with the present invention may be implemented as a combination of hardware and software or in hardware alone. Additionally, although aspects of the present invention are described for being stored in memory, one skilled in the art will appreciate that these aspects can also be stored on other types of computer-readable media, such as secondary storage devices, for example, hard disks, floppy disks, or CD-ROM; the Internet or other propagation medium; or other forms of RAM or ROM. It is intended that the specification and examples be considered as exemplary only, with a true scope and spirit of the invention being indicated by the following claims.

Computer programs based on the written description and flow charts of this invention are within the skill of an experienced developer.

## Claims

1. A system comprising a plurality of first electronic data objects for modelling the structure of an enterprise, each first electronic data object representing a unit of the enterprise and having one or more data fields, comprising:
each first electronic data object having at least two data fields for assigning at least two types of attributes to said unit, wherein the at least two types of attributes are selected from a group consisting of the following five types of attributes:
- a first type describing the work to be performed by said unit,
- a second type describing the legal entity, which said unit represents,
- a third type describing the disciplinary or line management properties of said unit,
- a fourth type describing the financial responsibility of said unit and
- a fifth type describing the location, which said unit represents.

2. The system of claim 1, wherein one or more first electronic data objects of said system are assigned to on or more other first electronic data object of said system.

3. The system of claim 1 or 2, wherein
one or more attributes are assigned to each type.

4. The system of one or more of claims 1 to 3, further comprising:
one or more second electronic data objects representing positions in the enterprise, said second electronic data objects being assignable to one or more types of attributes of one or more first electronic data objects.

5. The system of one or more of claims 1 to 4, further comprising:
one or more third electronic data objects representing natural persons of the enterprise, said third electronic data objects being assignable to one or more types of attributes of one or more of the first electronic data objects and/or to one or more second electronic data objects.

6. The system of one or more of claims 1 to 5, further comprising:
one or more fourth data objects representing movable or immovable things of the enterprise, said fourth data objects being assignable to one or more types of attributes of one or more of the first electronic data objects.

7. The system of one or more of claims 1 to 6, further comprising:
one or more rules for defining one or more evaluation algorithms to retrieve attributes or types of attributes of one or more of the first electronic data objects.

8. The system of one or more of claims 1 to 7, further comprising:
one or more rules for the limitation of the assignments and of relations amongst first, second, third and fourth electronic data objects.

9. The system of one or more of claims 1 to 8, wherein
an assignment type is assigned to an assignment.

10. A method for processing a system as of any of claims 1 to 9 by means of one or more processes running in a computer system, comprising:
creating and/or processing a plurality of first electronic data objects according to claim 1.

11. The method of claim 10, further comprising:
assigning at least to types of attributes as of claim 1 to one or more of said first electronic data objects.

12. The method of claim 10 or 11, further comprising:
assigning a first electronic data object to one or more other first electronic data objects.

13. The method of one or more of claims 10 to 12, further comprising:
assigning one or more attributes to each type of attributes.

14. The method of one or more of claims 10 to 13, further comprising:
creating one or more second electronic data objects representing positions in the enterprise, said second electronic data objects being assignable to one or more types of attributes of one or more first electronic data objects.

15. The method of one or more of claims 10 to 14, further comprising:
creating one or more third electronic data objects representing natural persons of the enterprise, said third electronic data objects being assignable to one or more types of attributes of one or more of the first electronic data objects and/or to one or more second electronic data objects.

16. The method of one or more of claims 10 to 15, further comprising:
creating one or more fourth data objects representing movable or immovable things of the enterprise, said fourth data objects being assignable to one or more types of attributes of one or more of the first electronic data objects.

17. The method of one or more of claims 10 to 16, further comprising:
creating one or more rules for defining one or more evaluation algorithms to retrieve attributes or types of attributes of one or more of the first electronic data objects.

18. The method of one or more of claims 10 to 17, further comprising:
creating one or more rules for the limitation of the assignments and of relations amongst first, second, third and fourth electronic data objects.

19. The method of one or more of claims 10 to 18, further comprising:
assigning an assignment type to an assignment.

20. The method of one or more of claims 10 to 19,
for use in a software for supporting business processes.

21. A computer system for processing a system as of any of claims 1 to 9 by means of one or more processes running in a computer system, comprising:
- memory having program instructions;
- input means for entering data;
- storage means for storing data;
- a processor responsive to the program instructions to:
creating and/or processing a plurality of first electronic data objects according to claim 1.

22. The computer system of claim 21, further comprising:
assigning at least to types of attributes as of claim 1 to one or more of said first electronic data objects.

23. The computer system of claim 21 or 22, further comprising:
assigning a first electronic data object to one or more other first electronic data objects.

24. The computer system of one or more of claims 21 to 23, further comprising:
assigning one or more attributes to each type of attributes.

25. The computer system of one or more of claims 21 to 24, further comprising:
creating one or more second electronic data objects representing positions in the enterprise, said second electronic data objects being assignable to one or more types of attributes of one or more first electronic data objects.

26. The computer system of one or more of claims 21 to 25, further comprising:
creating one or more third electronic data objects representing natural persons of the enterprise, said third electronic data objects being assignable to one or more types of attributes of one or more of the first electronic data objects and/or to one or more second electronic data objects.

27. The computer system of one or more of claims 21 to 26, further comprising:
creating one or more fourth data objects representing movable or immovable things of the enterprise, said fourth data objects being assignable to one or more types of attributes of one or more of the first electronic data objects.

28. The computer system of one or more of claims 21 to 27, further comprising:
creating one or more rules for defining one or more evaluation algorithms to retrieve attributes or types of attributes of one or more of the first electronic data objects.

29. The computer system of one or more of claims 21 to 28, further comprising:
creating one or more rules for the limitation of the assignments and of relations amongst first, second, third and fourth electronic data objects.

30. The computer system of one or more of claims 21 to 29, further comprising:
assigning an assignment type to an assignment.

31. The computer system of one or more of claims 21 to 30,
for use in a software for supporting business processes.

32. A computer readable medium comprising instructions for processing a system as of any of claims 1 to 9 by means of one or more processes running in a computer system, comprising instructions for:
creating and/or processing a plurality of first electronic data objects according to claim 1.

33. The computer readable medium of claim 32, further comprising:
assigning at least to types of attributes as of claim 1 to one or more of said first electronic data objects.

34. The computer readable medium of claim 32 or 33, further comprising:
assigning a first electronic data object to one or more other first electronic data objects.

35. The computer readable medium of one or more of claims 32 to 34, further comprising:
assigning one or more attributes to each type of attributes.

36. The computer readable medium of one or more of claims 32 to 35, further comprising:
creating one or more second electronic data objects representing positions in the enterprise, said second electronic data objects being assignable to one or more types of attributes of one or more first electronic data objects.

37. The computer readable medium of one or more of claims 32 to 35, further comprising:
creating one or more third electronic data objects representing natural persons of the enterprise, said third electronic data objects being assignable to one or more types of attributes of one or more of the first electronic data objects and/or to one or more second electronic data objects.

38. The computer readable medium of one or more of claims 32 to 37 further comprising:
creating one or more fourth data objects representing movable or immovable things of the enterprise, said fourth data objects being assignable to one or more types of attributes of one or more of the first electronic data objects.

39. The computer readable medium of one or more of claims 32 to 38, further comprising:
creating one or more rules for defining one or more evaluation algorithms to retrieve attributes or types of attributes of one or more of the first electronic data objects.

40. The computer readable medium of one or more of claims 32 to 39, further comprising:
creating one or more rules for the limitation of the assignments and of relations amongst first, second, third and fourth electronic data objects.

41. The computer readable medium of one or more of claims 32 to 40, further comprising:
assigning an assignment type to an assignment.

42. The computer readable medium of one or more of claims 32 to 41,
for use in a software for supporting business processes.

43. A computer data signal embodied in a carrier wave comprising:
code for processing a system as of any of claims 1 to 9 by means of one or more processes running in a computer system, said code comprising instructions for:
creating and/or processing a plurality of first electronic data objects according to claim 1.

44. An electronic data structure for systems according to one or more of claims 1 to 9.

45. Process of using an system according to one or more of claims 1 to 7 or an electronic data structure according to claim 44 in a software for supporting business processes.

## Amended claims

### Amended claims in accordance with Rule 86(2) EPC.

**1.** A system comprising a plurality of first electronic data objects for modelling the structure of an enterprise, each first electronic data object representing a unit of the enterprise and'having one or more data fields, comprising:
each first electronic data object having at least five data fields for assigning at least one type of at least five types of attributes to said data object; wherein the at least five types of attributes are selected from a group consisting of the following five types of attributes:
- a first type describing the work to be performed by said unit,
- a second type describing the legal entity, which said unit represents,
- a third type describing the disciplinary or line management properties of said unit,
- a fourth type describing the financial responsibility of said unit and
- a fifth type describing the location, which said unit represents.

**2.** The system of claim 1, wherein one or more first electronic data objects of said system are assigned to on or more other first electronic data object of said system.

**3.** The system of claim 1 or 2, wherein
one or more attributes are assigned to each type.

**4.** The system of one or more of claims 1 to 3, further comprising:
one or more second electronic data objects representing positions in the enterprise, said second electronic data objects being assigned to one or more types of attributes of one or more first electronic data objects.

**5.** The system of one or more of claims 1 to 4, further comprising:
one or more third electronic data objects representing natural persons of the enterprise, said third electronic data objects being assigned to one or more types of attributes of one or more of the first electronic data objects and/or to one or more second electronic data objects.

**6.** The system of one or more of claims 1 to 5, further comprising:
one or more fourth data objects representing movable or immovable things of the enterprise, said fourth data objects being assigned to one or more types of attributes of one or more of the first electronic data objects.

**7.** The system of one or more of claims 1 to 6, further comprising:
one or more rules for defining one or more evaluation algorithms to retrieve attributes or types of attributes of one or more of the first electronic data objects.

**8.** The system of one or more of claims 1 to 7, further comprising:
one or more rules for the limitation of the assignments and of relations amongst first, second, third and fourth electronic data objects.

**9.** The system of one or more of claims 1 to 8, wherein
an assignment type is assigned to an assignment.

**10.** A method for processing a system as of any of claims 1 to 9 by means of one or more processes running in a computer system, comprising:
creating and/or processing a plurality of first electronic data objects according to claim 1.

**11.** The method of claim 10, further comprising:
assigning at least to types of attributes as of claim 1 to one or more of said first electronic data objects.

**12.** The method of claim 10 or 11, further comprising:
assigning a first electronic data object to one or more other first electronic data objects.

**13.** The method of one or more of claims 10 to 12, further comprising:
assigning one or more attributes to each type of attributes.

**14.** The method of one or more of claims 10 to 13, further comprising:
creating one or more second electronic data objects representing positions in the enterprise, said second electronic data objects being assignable to one or more types of attributes of one or more first electronic data objects.

**15.** The method of one or more of claims 10 to 14, further comprising:
creating one or more third electronic data objects representing natural persons of the enterprise, said third electronic data objects being assignable to one or more types of attributes of one or more of the first electronic data objects and/or to one or more second electronic data objects.

**16.** The method of one or more of claims 10 to 15, further comprising:
creating one or more fourth data objects representing movable or immovable things of the enterprise, said fourth data objects being assignable to one or more types of attributes of one or more of the first electronic data objects.

**17.** The method of one or more of claims 10 to 16, further comprising:
creating one or more rules for defining one or more evaluation algorithms to retrieve attributes or types of attributes of one or more of the first electronic data objects.

**18.** The method of one or more of claims 10 to 17, further comprising:
creating one or more rules for the limitation of the assignments and of relations amongst first, second, third and fourth electronic data objects.

**19.** The method of one or more of claims 10 to 18, further comprising:
assigning an assignment type to an assignment.

**20.** A computer system for processing a system of data objects as of any of claims 1 to 9 by means of one or more processes running in a computer system, comprising:
- memory having program instructions;
- input means for entering data;
- storage means for storing data;
- a processor responsive to the program instructions, said program instructions providing means for performing a method as of any of claims 10 to 19.

**21.** A computer readable medium comprising program instructions for performing a method as of any of claims 10 to 19 in case said program instructions are loaded into a computer system and executed.

**22.** An electronic data structure according to one or more of claims 1 to 6.

**23.** Use of an electronic data structure according to claim 22 in a software for supporting business processes.
